# EUROPEAN PATENT SPECIFICATION

(11) **EP 0 409 610 B1**
(45) Date of publication and mention of the grant of the patent: **17.05.1995**
(21) Application number: 90307889.7
(22) Date of filing: 19.07.1990
(51) Int. Cl.: F16H 48/20, F16D 13/04

(54) **Coupling apparatus**
Kupplungseinrichtung
Dispositif d'embrayage

(30) Priority: 20.07.1989 JP 185869/89; 28.08.1989 JP 218549/89; 31.01.1990 JP 18847/90; 28.03.1990 JP 77043/90
(43) Date of publication of application: 23.01.1991
(73) Proprietor: TOCHIGIFUJISANGYO KABUSHIKI KAISHA, Tochigi-shi Tochigi-ken (JP)
(72) Inventor: Teraoka, Masao, c/o Tochigifujisangyo K.K., Tochigi-shi, Tochigi-ken (JP); Kurihara, Sakuo, c/o Tochigifujisangyo K.K., Tochigi-shi, Tochigi-ken (JP); Hirota, Isao, c/o Tochigifujisangyo K.K., Tochigi-shi, Tochigi-ken (JP)
(74) Representative: Abbie, Andrew Kenneth

(56) References cited:
- EP-A- 0 315 200
- DE-A- 2 209 879
- DE-A- 3 612 189
- US-A- 3 831 462
- US-A- 4 718 303
- US-A- 4 781 078
- AUTOMOBILE ENGINEER. vol. 49, no. 4, April 1959, LONDON GB pages 148 - 149;"Differential Lock"

## Description

The present invention relates to a coupling apparatus for coupling first and second rotary shafts to transmit power from the first shaft to the second shaft or vice versa, and particularly, but not exclusively, to coupling apparatus suitable for use with a differential gear assembly mounted on an automotive vehicle to limit differential motion thereof as conditions require.

A limited-slip differential gear assembly provided with a single multidisk clutch for limiting differential operation is disclosed in patent specifications US-A- 4,718,303 and US-A- 4,781,078. The differential gear assemblies disclosed in the above-mentioned patent specifications are each provided with a single multidisk clutch, the engagement force of the multidisk clutch is controlled by an electromagnet. That is, when the electromagnet is energized, friction force is generated between two contacting friction plates due to the differential motion to actuate a cam mechanism, so that the friction plates are further brought into tight contact with each other by a cam thrust to increase the friction force into the multidisk clutch engagement.

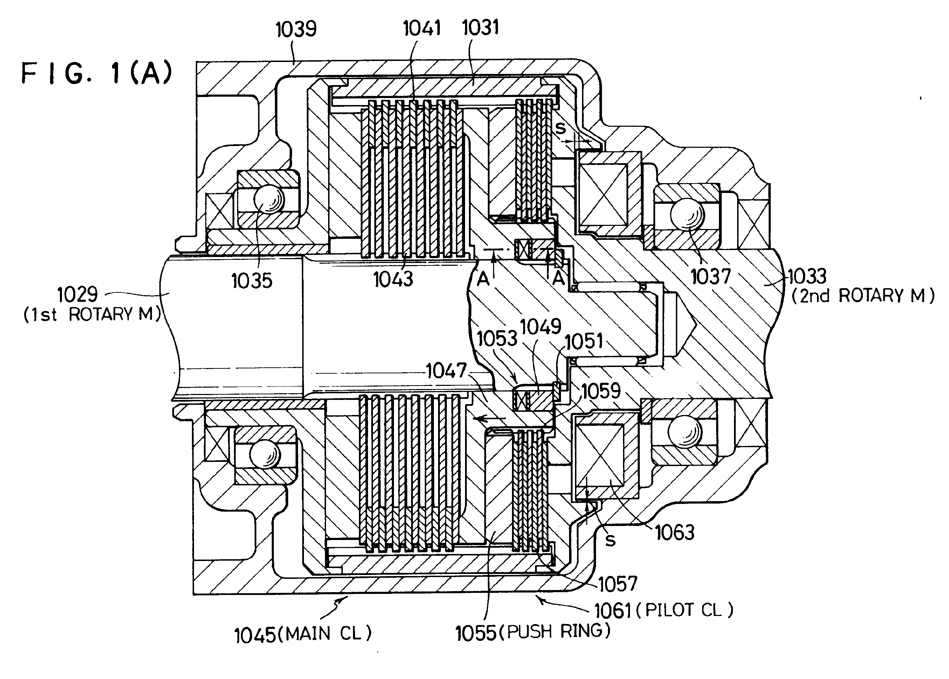

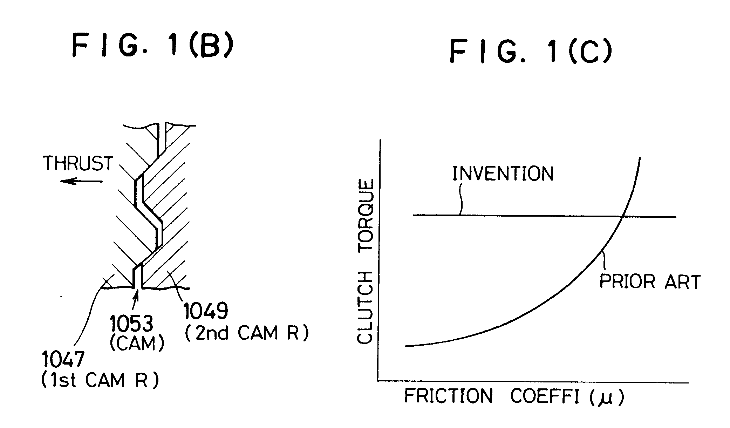

In this prior-art coupling apparatus, however, when the friction plates of the multidisk clutch wear away, since the air gap between the electromagnet and a plunger member varies and therefore the characteristics between magnet current valve and clutch engagement force change, there exists a problem in that an appropriate differential limiting operation will not be controlled stably and reliably by the electromagnet. Further, where the thrust force is increased by changing the cam angle, since the clutch engagement force multiplied by the cam increases greatly with increasing frictional coefficient » of the friction plates, as shown by the prior art curve shown in Fig. 1(C), it is impossible to stably control a large differential limitation force by the cam. Therefore, where a large torque is required to be controlled, the diameter of the clutch inevitably increases and therefore the size of the coupling apparatus also increases.

An object of the present invention is to provide a coupling apparatus wherein the above-mentioned disadvantages or limitations are avoided or at least reduced.

DE-A-2209879 discloses a coupling apparatus comprising a first rotatable means; a second rotatable means; main clutch means for controllably transmitting a rotative motion between said first and second rotating means when controllably engaged; and cam ring means actuable for controllably engaging only said main clutch means when axially slidably actuated. The cam ring means is actuated to engage the main clutch means when there is a predetermined speed difference between the first and second rotatable means.

US-A-3 831 462 discloses a limited slip differential comprising: first rotatable means; second rotatable means disposed coaxially with said first rotatable means; clutch means disposed between said first and second rotatable means, for controllably transmitting a rotative motion between said first and second rotatable means when controllably engaged; and
cam ring means disposed coaxially with said first and second rotatable means and said clutch means, for controllably engaging said clutch means. The clutch means comprises first and second portions which are initially actuated simultaneously by the cam ring means in response to a predetermined speed of relative rotation between the first and second rotatable means by an actuator acting directly on the cam ring means.

The applicant's own EP-A-0315200 discloses a coupling apparatus comprising: a first rotatable means; a second rotatable means; and clutch means for controllably transmitting a rotative motion between said first and second rotatable means when controllably engaged. The clutch is held in an engaged position by means of a biasing spring and disengaged by actuation of a clutch operating means which includes a cam and a disc brake for actuating the cam. The clutch operating means and more specifically the disc brake is actuated by operation of a foot brake of a vehicle to which the apparatus is fitted so that on application of the foot brake torque transmission between the first and second rotatable means is interrupted. Alternatively, the clutch operating means is actuable at a predetermined temperature.

The present invention provides a coupling apparatus comprising:
first rotatable means;
second rotatable means;
main clutch means for controllably transmitting a rotative motion between said first and second rotatable means when controllably engaged; and
cam ring means actuable for controllably engaging only said main clutch means when axially slidably actuated;
characterised by a pilot clutch means for actuating said cam ring means when controllably engaged; and
pilot clutch actuating means for adjustably controllably engaging said pilot clutch means, said pilot clutch means being adjustably controllably engaged to an extent determined by the force exerted by the pilot clutch actuating means.

In many of the described embodiments, the second rotatable means is disposed coaxially with said first rotatable means; said cam ring means is axially slidably actuable and disposed coaxially with said first and second rotatable means and said main clutch means; and said controllably engageable pilot clutch means is arranged to provide a controllable rotative speed difference in said cam ring means when controllably engaged whereby said cam ring means is axially slidably actuated.

In one such embodiment the coupling apparatus is incorporated with a planetary differential gear assembly housed within a transfer case, said first rotatable means is a planetary carrier, said second rotatable means is a sun gear and said pilot clutch means is arranged to transmit rotation between said planetary carrier and said cam ring means when controllably engaged.

Alternatively in another such embodiment, the coupling apparatus is incorporated with a planetary differential gear assembly housed within a transfer case, said first rotatable means is a shaft, said second rotatable means is a shaft formed with a sun gear and said pilot clutch means is arranged to transmit rotation between a rotatable case, which rotatable case is rotatable within said transfer case and is rotatably connected with said shaft, and said cam ring means when controllably engaged.

In a further such embodiment, the coupling apparatus is incorporated with a differential gear assembly housed within a differential carrier case, said first rotatable means is a planetary carrier which is rotatable within said differential carrier case, said second rotatable means is a sun gear and said pilot clutch means is arranged to transmit rotation between said planetary carrier and said cam ring means when controllably engaged.

In another such embodiment, the coupling apparatus is mounted intermediate the front and rear wheel drive shafts of a four-wheel drive vehicle, said first rotatable means is a coupling shaft rotatably connected to a propeller shaft, said second rotatable means is a drive pinion shaft of a rear differential gear assembly and said pilot clutch means is arranged to transmit rotation between a clutch drum fixed to said coupling shaft and said cam ring means when controllably engaged.

In an alternative arrangement to the above-mentioned embodiment the coupling apparatus further comprises a third rotatable means, said first rotatable means is differentially coupled to said third rotatable means; said second rotatable means is disposed coaxially with said first rotatable means and is differentially coupled to said third rotatable means; said cam ring means is axially slidably actuable and disposed coaxially with said first, second and third rotatable means and said main clutch means; and said controllably engageable pilot clutch means is arranged to transmit rotation between said cam ring means and said third rotatable means for providing a controllable rotative speed difference in said cam ring means when controllably engaged, whereby said cam ring means is axially slidably actuated.

Preferably the cam ring means comprises a first slidable cam ring and a second cam ring, said first cam ring being axially slidable in a direction opposite to an axial movement of engagement of said pilot clutch means in response to a cam thrust force generated between said first and second cam rings to controllably engage only said main clutch means.

The cam thrust force may be generated between said first and second cam rings by a plurality of projections opposingly formed along each inner contact surface of said first and second cam rings so as to be slidably engaged with each other.

Alternatively, the cam thrust force may be generated between said first and second cam rings by a plurality of balls sandwiched between two recesses opposingly formed along each inner contact surface of said first and second cam rings which engage each other via said balls.

The clutch actuating means may be an electromagnet adapted to controllably engage said pilot clutch means via a push ring.

Alternatively, the clutch actuating means may be an air operated piston adapted to controllably engage said pilot clutch means via a push member.

The pilot clutch means may be a multidisk friction plate clutch.

The pilot clutch means may be a magnetic fluid multidisk plate clutch, the viscosity of said magnetic fluid being adjusted according to magnetic intensity applied thereto for controllable engagement thereof.

Preferably, the main clutch means is a multidisk friction plate clutch.

In order that the invention may be well understood, some embodiments thereof, which are given by way of example only, will now be described with reference to the accompanying drawings in which:
Fig. 1(A) is a cross-sectional view showing a first embodiment of the coupling apparatus;
Fig. 1(B) is an enlarged partial cross-sectional view taken along the line A-A shown in Fig. 1(A) showing a cam mechanism of the coupling apparatus;
Fig. 1(C) is a graphical representation of the relationship between the friction coefficient (») between two clutch plates and the clutch engagement torque, in which the clutch engagement torque of the coupling apparatus is contrasted with that of prior-art apparatus;
Fig. 2 is a schematic representation of an engine power drive system of a 4-wheel drive vehicle which incorporates the coupling apparatus;
Fig. 3(A) is a cross-sectional view showing a second embodiment of the coupling apparatus applied to a center differential gear assembly as shown in Fig. 2;
Fig. 3(B) is an enlarged partial cross-sectional view taken along the line A-A shown in Fig. 3(A);
Fig. 4(A) is a cross-sectional view showing a third embodiment of the coupling apparatus applied to a transfer including a center differential gear assembly;
Fig. 4(B) is an enlarged partial cross-sectional view taken along the line A-A shown in Fig. 4(A);
Fig. 5(A) is a cross-sectional view showing a fourth embodiment of the coupling apparatus applied to a center differential gear assembly as shown in Fig. 2, in which the first embodiment shown in Fig. 1(A) is combined with a planetary-type differential gear assembly;
Fig. 5(B) is an enlarged partial cross-sectional view taken along the line A-A shown in Fig. 5(A);
Fig. 6 is a cross-sectional view showing a fifth embodiment of the coupling apparatus applied to a rear differential gear assembly as shown in Fig. 2;
Fig. 7 is a cross-sectional view showing a sixth embodiment of the coupling apparatus applied to a planetary differential gear assembly, in which an electromagnetic fluid is charged into a working chamber of a pilot clutch;
Fig. 8(A) is a cross-sectional view showing a seventh embodiment of the coupling apparatus connected between the propeller shaft and the rear differential gear assembly as shown in Fig. 2; and
Fig. 8(B) is an enlarged partial cross-sectional view taken along the line A-A shown in Fig. 8(A).

Figs. 1(A) and (B) show a first embodiment of the coupling apparatus which comprises a first rotatable means comprising a rotary member 1029, a second rotatable means comprising a rotary member 1033, pilot clutch means in the form of a multidisk clutch 1061, main clutch means in the form of a main multidisk clutch 1045, pilot clutch actuating means comprising an electromagnet 1063, a push ring 1055 attracted by the electromagnet 1063 when energized, a cam ring means or mechanism 1053 formed between a first axially slidable cam ring 1047 and a second cam ring 1049 which is fixed to the first rotary member 1029.

In more detail, the first rotary member (shaft) 1029 is rotatably supported within a clutch drum 1031. The drum 1031 is fixed to the second rotary member (shaft) 1033 supported coaxially with the shaft 1029 within a casing 1039 via bearings 1035 and 1037. Rotative power is supplied to the shaft 1029 and a load is connected to the shaft 1033.

Friction plates 1041 and 1043 of the main clutch 1045 are axially slidably arranged between the clutch drum 1031 and the shaft 1029 in alternate juxtaposed positional relationship to each other. The outer friction plates 1041 are axially slidably engaged with the drum 1031 and the inner friction plates 1043 are axially slidably engaged with the shaft 1029 so as to form the main multidisk clutch 1045.

The first slidable cam ring 1047 is axially slidably fitted to shaft 1029 on the right side (as viewed in Fig 1(A)) of the main multidisk clutch 1045. The second fixed cam ring 1049 is spline engaged with shaft 1029 and fixed by a retainer ring 1051 from the right side. As shown in Fig. 1(B), the cam mechanism 1053 is formed between these two cam rings 1047 and 1049 in such a way that a cam thrust force is generated between the first and second cam rings 1047 and 1049 by a plurality of mutually engaged projections opposingly formed on a respective inner contact surface of each of the two cam rings.

The push ring 1055 is axially slidably spline engaged with the first slidable cam ring 1047. Adjacent the right side of the push ring 1055, friction plates 1057 and 1059 are disposed in alternate juxtaposed positional relationship to each other. The outer friction plates 1057 are axially slidably engaged with the clutch drum 1031 and the inner friction plates 1059 are axially slidably engaged with the first slidable cam ring 1047 so as to form the pilot multidisk clutch 1061. The electromagnet 1063 is fixed to the casing 1039 to the right of the pilot multidisk clutch 1061. When the electromagnet 1063 is energized to attract the push ring 1055, the pilot multidisk clutch 1061 is engaged.

When the electromagnet 1063 is deenergized, since the pilot clutch 1061 is disengaged or released, the main clutch 1045 is also kept disengaged or released and thus no power is transmitted from the first rotary member 1029 to the second rotary member 1033 or vice versa. When the electromagnet 1063 is energized, the push ring 1055 is attracted toward the electromagnet 1063 to controllably engage the pilot multidisk clutch 1061 and the first slidable cam ring 1047 is engaged with the second rotary member 1033 via the pilot clutch 1061. On the other hand, since the second fixed cam ring 1049 is rotated by the first rotary member 1029 and due to a difference in rotative speed between the two cam rings, the first slidable cam ring 1047 is shifted leftward by a cam thrust force generated by the cam mechanism 1053 to controllably engage the main clutch 1045. Thus the first and second rotary members 1029 and 1033 are coupled or locked with each other by the main clutch 1045.

Since a pilot and a main multidisk clutch 1061 and 1045 are provided, it is possible to obtain a large coupling power. Here it should be noted that the two (horizontal and vertical) air gaps S between the electromagnet 1063 and the clutch drum 1031 will not vary even after the friction plates 1057 and 1059 of the pilot clutch 1061 have been worn away and that the leftwardly acting cam thrust force generated between the two cam rings 1047 and 1049 will not be applied to the pilot clutch 1061. That is, the thrust force is in a direction opposite to the operative direction or axial movement of engagement of the pilot clutch 1061. Further, it is possible to adjustably control the coupling torque between the two rotary members 1029 and 1033 by adjusting the current passed through the electromagnet 1063 to change the engagement torque of the pilot clutch 1061.

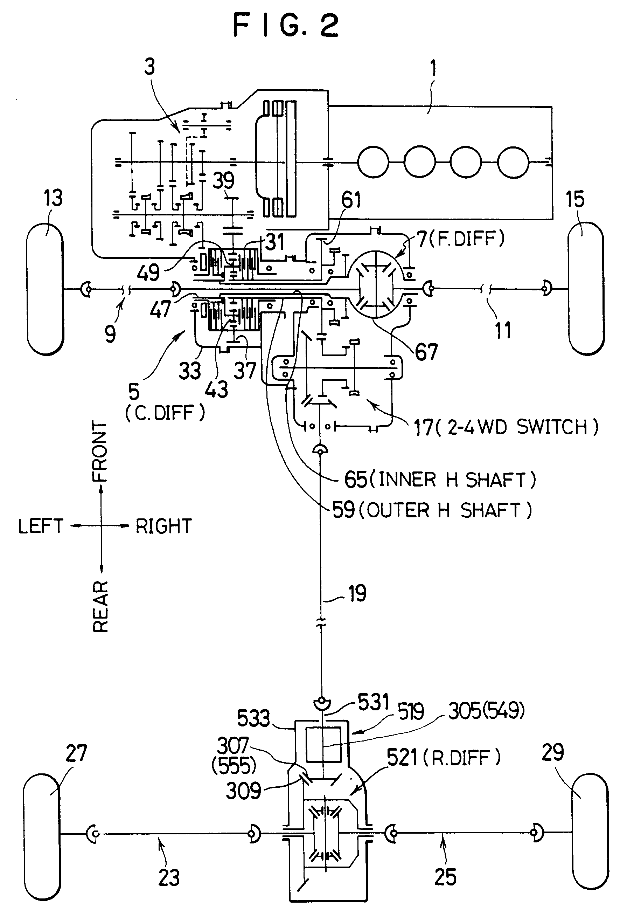

Prior to a description of further embodiments of the coupling apparatus which is suitable for use with a differential gear assembly mounted on an automotive vehicle, an exemplary 4-WD power transmission system for an automotive vehicle will be explained with reference to Fig. 2. This power transmission system comprises an engine 1, a transmission 3, a center differential gear assembly 5 (a differential gear between the front and rear wheels), a front differential gear assembly 7 (a differential gear between the front right and left wheels), front left and right wheel drive shafts 9 and 11, front left and right wheels 13 and 15, a 2-4 wheel drive switching gear assembly 17, a propeller shaft 19, a coupling apparatus 519, a rear differential gear assembly 521 (a differential gear between the rear right and left wheels), rear wheel drive shafts 23 and 25, rear left and right wheels 27 and 29.

Engine power supplied via the transmission 3 is differentially distributed to the front differential gear assembly 7 and the propeller shaft 19 via the center differential gear assembly 5. Engine power supplied to the front differential gear assembly 7 is further differentially distributed to the front left and right wheels 13 and 15 via the same front gear assembly 7. Further, in 4-WD mode, engine power is supplied to the rear differential gear assembly 521 via the propeller shaft and the coupling apparatus 519. Engine power supplied to the rear differential gear assembly 521 is further differentially distributed to the rear left and right wheels 27 and 29 via the same rear gear assembly 521. Further, in front 2-WD mode, engine power is not supplied to the rear differential gear assembly 521 via the coupling apparatus 519.

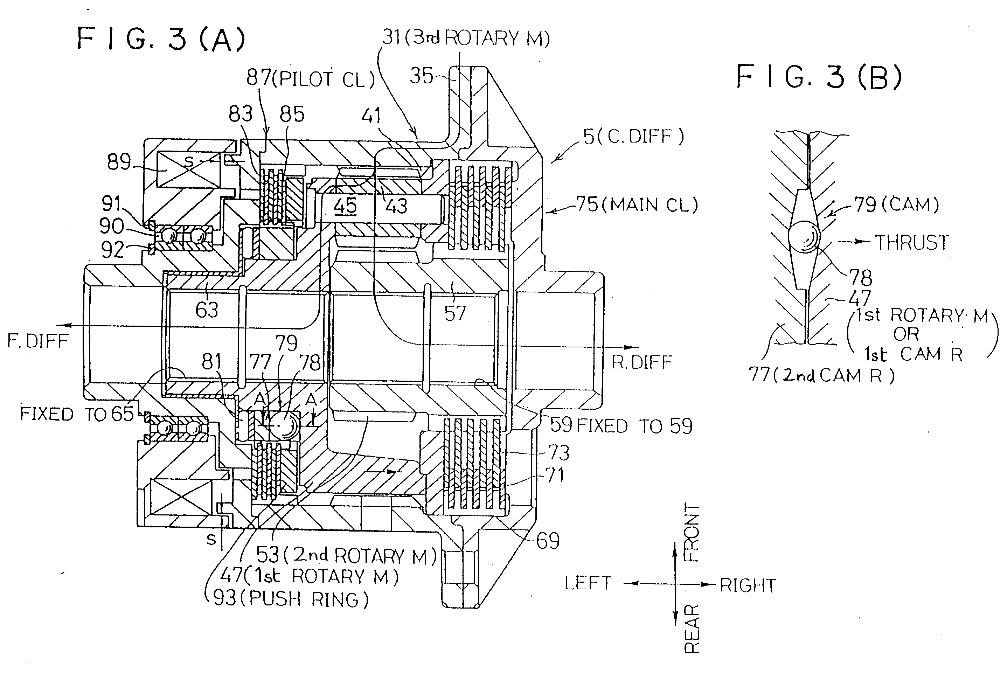

Figs. 3(A) and (B) show a second embodiment of the coupling apparatus according to the present invention, which is applied to the center differential gear 5 (shown in Fig. 2) for differentially distributing engine power to the front and rear wheels. In this embodiment, the first rotatable means comprises a rotary member in the form of a slidable planetary carrier 47, the second rotatable means comprises a rotary member in the form of a sun gear shaft 53 and the third rotatable means comprises a rotary member in the form of a differential case 311. A pilot clutch means 87 is disposed between a cam ring means or mechanism 79 and the differential case 31. The slidable planetary carrier 47 comprises a slidable cam ring for engaging a main clutch means 75. The differential case 31 of the center differential gear 5 is disposed rotatably within a transmission case 33 (shown in Fig. 2). A ring gear 37 (shown in Fig. 2) is fixed to a flange 35 of the center gear 5 with bolts and this ring gear 37 is in mesh with a drive gear 39 (shown in Fig. 2) of the transmission 3. Therefore, the differential case 31 is rotated by drive power from the engine 1.

As shown in Fig. 3(A), an inner gear 41, is formed in the inner circumference of the differential case 31 and outer planetary gears 43 are in mesh with this inner gear 41. Each planetary gear 43 is rotatably supported by an axle 45 supported by the slidable planetary carrier 47 (the first rotary member). The outer planetary gears 43 are in mesh with inner planetary gears 49 (shown in Fig. 2) each rotatably supported by an axle fixed to the planetary carrier 47. The inner planetary gears also mesh with a sun gear 53 (of the second rotary member). A planetary gear assembly (a differential mechanism) is constructed as described above.

The sun gear 53 is formed with a boss portion 57 having an inner circumference spline engaged with one end of an outer hollow shaft 59 (shown in Fig. 2). The other end of the outer hollow shaft 59 is engaged with a change-direction gear assembly 17 via a ring gear 61 (both shown in Fig. 2). The planetary carrier 47 is formed with a boss portion 63 having an inner circumference spline engaged with an inner hollow shaft 65 (shown in Fig. 2) which is rotatably disposed within the outer hollow shaft 59 (shown in Fig. 2) and fixed to a differential case 67 (shown in Fig. 2) of the front differential gear assembly 7.

When the differential case 31 is driven from the engine 1, engine power is transmitted to the front differential gear assembly 7 via the differential case 31, the planetary gears 43 and 49, the planetary carrier 47, and the inner hollow shaft 65. Engine power is also transmitted to the propeller shaft 19 via the differential case 31, the planetary gears 43 and 49, the sung gear 53, the outer hollow shaft 59, and the 2-4 WD switch 17. If there is a difference in driving resistance between the front and rear wheels, engine power is differentially distributed to the front wheels and the rear wheels, owing to the relative rotation between the sun gear 53 and the planetary carrier 47 due to revolutions of the two planetary gears 43 and 49 both round the sun gear 53 and their own axes, according to the driving resistance difference.

A clutch drum 69 is disposed to the right (as viewed in Fig. 3(A)) of the planetary gear assembly so as to be rotatable relative to the differential case 31. This clutch drum 69 is fixed to the right-hand end of the planetary carrier 47. Outer friction plates 71 are axially slidably engaged with the inner circumferential surface of the clutch drum 69 and inner friction plates 73 are axially slidably engaged with the outer circumferential surface of the boss portion 57 of the sun gear 53. The respective friction plates 71, 73 are disposed in alternative juxtaposed positional relationship thus forming the main clutch means in the form of a multidisk clutch 75 for differential motion limitation.

When the main multidisk clutch 75 is engaged, mutual rotation between the sun gear 53 and the planetary carrier 47 can be limited and thus differential motion between the front and rear wheels can be also limited.

The cam ring mechanism 79 is formed between a fixed cam ring 77 and the planetary carrier 47 which comprises the first slidable cam ring, with cam balls 78 sandwiched therebetween as shown in Fig. 3(B). A thrust bearing 81 is disposed between the cam ring 77 and the differential case 31 so as to receive a leftwardly acting reaction force of the thrust of the cam ring 77.

The pilot clutch means is in the form of a pilot multidisk clutch comprising outer friction plates 83 and inner friction plates 85. The outer friction plates 83 and inner friction plates 85 are disposed between the cam ring 77 and the differential case 31 in alternate juxtaposed positional relationship with respect to each other. The outer friction plates 83 are axially slidably engaged with an inner circumference of the differential case 31 and the inner friction plates 85 are axially slidably engaged with an outer circumference of the cam ring 77. A pilot clutch actuating means comprises an electromagnet 89 is mounted via a bearing 90 with two retainer rings 91 and 92 on the outside of differential case 31. A push ring 93 for engaging the pilot multidisk clutch 87 is disposed between the pilot multidisk clutch 87 and the planetary carrier 47. It should be noted that two horizontal and vertical air gaps S between the electromagnet 89 and the differential case 31 will not change when the friction plates 83 and 85 have been worn away. In summary, the coupling apparatus includes the main multidisk clutch 75, the cam ring mechanism 79 which includes cam ring 77 and the cam balls 78, the pilot multidisk clutch 87, the electromagnet 89 and the two rotary members (planetary carrier and sun gear) 47 and 53.

When the pilot multidisk clutch 87 is engaged by energizing the electromagnet, since the fixed cam ring 77 is engaged with the planetary carrier 47 via the cam balls 78 and it is possible to obtain differential limitation according to the engagement force of the pilot multidisk clutch 87. Further, if there is a difference in rotative force between the differential case 31 and the planetary carrier 47, since this force is applied to the cam mechanism 79, a cam thrust force (acting to the right in Fig. 3(A)) is generated. The main multidisk clutch 75 is controllably engaged via the planetary carrier 47 and the clutch drum 69 by this thrust force to generate a further larger differential motion limiting force. When the pilot multidisk clutch 87 is disengaged, since the cam ring 77 rotates together with the planetary carrier 47, the cam ring mechanism 79 will not generate a thrust force and thus the main multidisk clutch 75 is kept disengaged to enable differential motion.

In summary, when the pilot clutch 87 is disengaged, the planetary carrier (1st rotary member) 47 and the cam ring 77 are rotated together via the cam balls 78. Since no cam thrust force is generated in the planetary carrier 47, the main clutch 75 is also disengaged and thus differential motion between the two rotary members 47 and 53 is enabled. When the pilot clutch 87 is controllably engaged, since the rotational motion of the cam ring 77 is restricted, the rotative motion of the planetary carrier 47 is also limited according to the engagement force of the pilot clutch 87. In addition, once differential motion occurs between the cam ring 77 and the planetary carrier 47, a cam thrust force is generated causing engagement of the main clutch 75 so that differential motion between the two rotary members 47 and 53 is limited or locked.

The pilot multidisk clutch 87 can be operated manually by the driver or automatically according to steering conditions or road surface conditions. The center differential 5 is constructed as described above.

The function of the center differential gear 5 will be explained in relation to the vehicle power transmission system shown in Fig. 2.

When the electromagnet is de-energized and thus the pilot multidisk clutch 87 is disengaged, differential motion between the front and rear wheels can be effected freely through the center differential gear 5. Therefore, the vehicle can be turned smoothly without producing the tight corner braking phenomenon. When the pilot multidisk clutch 87 is controllably engaged, differential motion between the front and rear wheels can be limited according to a difference in rotative speed between the front and rear wheels. Therefore, if the front wheels 13, 15 or the rear wheels 27, 29 slip on a slippery road, since a torque can be transmitted to the wheel set not slipping, the vehicle can be driven.

As described above, when the pilot multidisk clutch 87 is engaged, the cam mechanism 79 is actuated and therefore the main multidisk clutch 75 can be controllably engaged by the cam thrust force acting through the planetary carrier (the slidable cam ring) 47. In this embodiment, since the axial directions of engagement of the two clutches 87 and 75 are opposite to each other, a cam reaction force is not applied to the pilot multidisk clutch 87. Therefore, the clutch engagement force of the main multidisk clutch 75 is not directly subjected to the influence of variation in engagement force due to abrasion or friction coefficient fluctuation of the friction plates 83 and 85 of the pilot multidisk clutch 87. Therefore, it is possible to obtain a stable or constant differential motion limitation function, as shown in Fig. 1(C), without being subjected to the influence of the conditions of the friction plates of the pilot clutch 87. Further, since two independent differential motion limitation functions are provided for by the pilot and main multidisk clutches 87 and 75 respectively, it is possible to obtain a large differential motion limitation force in total. Further, since the reaction thrust force of the cam 79 will not be applied to the friction plates 83 and 85 of the pilot multidisk clutch 87, fluctuations of the friction coefficients » of the friction plates 83 and 85 will not be amplified by the cam mechanism 79. Therefore, it is possible to increase the engagement force of the main clutch 75 by increasing inclination angles of the cam mechanism 79 without being subjected to the influence of variation in the friction coefficient » of the friction plates 83 and 85. Therefore, a large torque can be transmitted and the coupling apparatus can be downsized. Further, in this embodiment, since the first slidable cam ring is integral with the planetary carrier 47 it is only necessary to provide one ring member and thus the weight of the coupling apparatus is reduced.

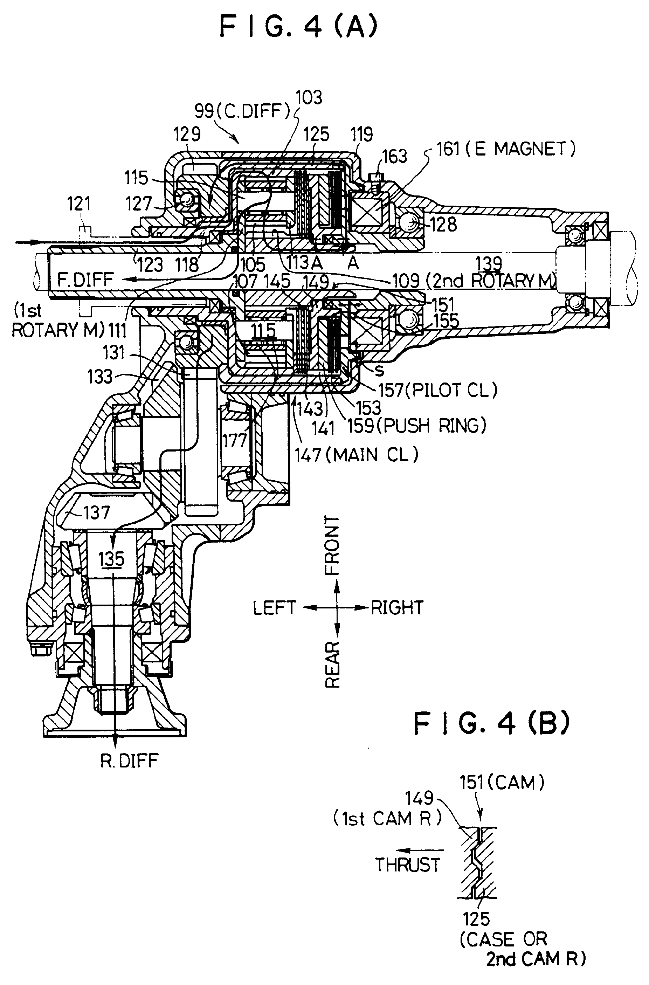

Figs. 4(A) and (B) show a third embodiment of a coupling apparatus which is incorporated with a center planetary differential gear assembly 99 housed within a transfer case 119, for differentially distributing engine power to the front and the rear differential gear assemblies. In this embodiment, the first rotatable means comprises a rotary member in the form of a planetary carrier 111 or 113 and the second rotatable means comprises a rotary member in the form of a sun gear 109. A pilot clutch means 157 is arranged to transmit rotation between a cam ring means or mechanism 151 and the planetary carrier 111 which is rotatable within the transfer case 119.

The center planetary differential gear assembly 99 comprises an inner gear 103, outer planetary gears 105 in mesh with the inner gear 103, inner planetary gears 107 in mesh with the outer planetary gears 105, and the sun gear 109 (the second rotary member) in mesh with the inner planetary gears 107. These planetary gears 105 and 107 are supported by axles 115 respectively supported by right and left planetary carriers 111 and 113 via bearings 177.

A hollow member 118 formed integrally with the inner gear 103 is spline engaged with an outer hollow shaft 121 which is inserted into the inside of a transfer case 119 from left (as viewed in Fig. 4(A)). The left side carrier 111 is formed integral with an inner hollow shaft 123 inserted into the outer hollow shaft 121. The sun gear 109 is spline coupled to the right end of a rotary case 125 (in which the center planetary differential gear assembly 99 is housed) and rotatably supported within the transfer case 119 via bearings 127 and 128. A gear 129 is fixed to the left end of the rotatable case 125 so as to be in mesh a gear 131 rotatably supported by the transfer case 119. A bevel gear 133 is fixed to this gear 131 and in mesh with a bevel gear 137 formed at the front end of a drive pinion shaft 135. Further, a front differential drive shaft 139 is fitted to the hollow shaft 123, the sun gear 109, and the rotatable case 125.

Engine drive power is transmitted from the transmission to the front differential gear by way of the outer hollow shaft 121, the hollow member 118, the inner gear 103, the outer planetary gear 105 or the inner planetary gear 107, the axle 115, the planetary carrier 111, and the inner hollow shaft 123. Engine drive power is transmitted to the rear differential gear by way of the outer hollow shaft 121, the hollow member 118, the inner gear 103, the outer planetary gear 105, the inner planetary gear 107, the sun gear 109, the rotatable case 125, gear 129, the bevel gears 133 and 137, and the drive pinion shaft 135.

A clutch drum 141 formed separately of the inner gear 103 is fixed to the right side of planetary carrier 113. The main clutch means 147 in the form of a multidisk clutch comprises outer and inner friction plates 143 and 145 which are axially slidably arranged between the clutch drum 141 and the sun gear 109 in alternate juxtaposed positional relationship with respect to each other. The outer friction plates 143 are axially slidably engaged with the clutch drum 141 and the inner friction plates 145 are axially slidably engaged with the sun gear 109. The cam ring mechanism 151 is formed between respective inner surfaces of a slidable cam ring 149 which is slidably disposed to the right of the main multidisk clutch 147 and the rotatable case 125 (the second fixed cam ring), as depicted in Fig. 4(B).

The pilot clutch means 157 is in the form of a multidisk clutch comprising outer friction plates 153 and inner friction plates 155. The outer friction plates 153 and inner friction plates 155 are axially slidably arranged between the cam ring mechanism 151 and the clutch drum 141 in alternate juxtaposed positional relationship to each other. The outer friction plates 153 are axially slidably engaged with the clutch drum 141 and the inner friction plates 155 are axially slidably engaged with the cam ring 149. A push ring 159 is axially slidably spline-engaged with the slidable cam ring 149 between the friction plates 153 and 155 and the slidable cam ring 149. A pilot clutch actuating means comprising an electromagnet 161 is fixed to the transfer case 119 with bolts 163.

The operation of this third embodiment is substantially the same as that of the first embodiment shown in Figs. 1(A) and (B). That is, when the electromagnet 161 is de-energized pilot clutch 157 is disengaged and, therefore, the slidable cam ring 149 rotates together with the sun gear 109 (the second rotary member) via the cam mechanism 151 so that the main multidisk clutch is disengaged enabling differential motion between the planetary carrier 111 or 113 (and thus the inner gear 103 or the inner hollow shaft 123 connected to the front differential gear) and the sun gear 109 (and thus the rotatable case 125 which is connected to the rear differential gear) is enabled.

When the electromagnet 161 is energized the push ring 159 is attracted in the rightward direction (as viewed in Fig. 4(A)) thereby causing engagement of the pilot clutch 157 so that the first slidable cam ring is engaged with the clutch drum 141 so as to be rotated with the carrier 111, 113. Since the slidable cam ring 149 is rotated by the planetary carrier 111 or 113 and the rotatable case 125 (the second fixed cam ring) is rotated by the sun gear 109, a rotative speed difference between the carrier and the sun gear generates a cam thrust force. The slidable cam ring 149 is shifted by the cam thrust force in the leftward direction (in Fig. 4(A)) to cause controllable engagement of the main clutch 147. When main clutch 147 is engaged, differential motion between the planetary carrier 111, 113 (the first rotary member) and the sun gear 109 (the second rotary member) is slip limited or locked according to the engagement force of the main clutch 147.

In this embodiment, it should be noted that the second fixed cam ring is integral with the rotatable case 125 and the two air gaps S between the electromagnet 161 and the rotatable case 125 will not vary even after the friction plates 151 and 153 have been worn away.

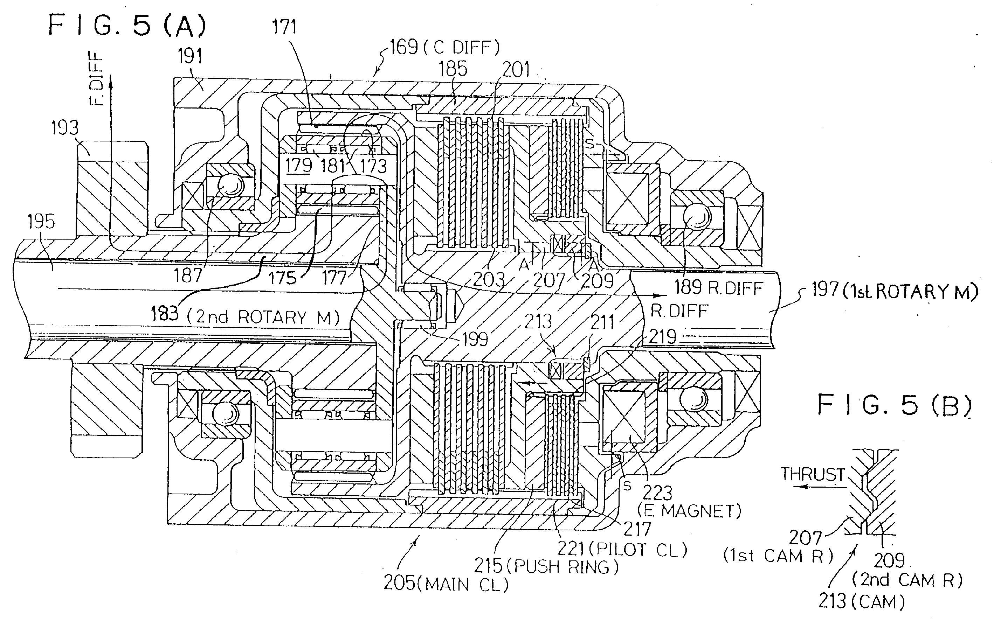

Figs. 5(A) and (B) show a fourth embodiment of the coupling apparatus in which a coupling apparatus according to the first embodiment shown in Fig. 1(A) is combined with a planetary gear type center differential gear assembly 169. In this embodiment, the first rotatable means comprises a rotary member in the form of a shaft 197 to which is fixed a differential case formed with an inner gear 171 and the second rotatable means comprises a rotary member in the form of a hollow shaft 183 formed with a sun gear 175. A pilot clutch means 221 is disposed between a cam ring means or mechanism 213 and a rotatable case 185 which is rotatable within a transfer case 191 and is rotatably engaged with the hollow shaft 183 for transmitting motion between the shaft and the cam ring mechanism.

The center differential gear assembly 169 comprises the inner gear 171 (fixed to the first rotary member), a planetary gear 173 in mesh with the inner gear 171 and the sun gear 175 (formed on the second rotary member) which is in mesh with the planetary gear 173. The planetary gear 173 is rotatably supported by axles 179 supported by a planetary carrier 177 via bearings 181.

The hollow shaft 183 is spline-engaged with the rotatable case 185 in which the center differential gear assembly 169 is housed. This rotatable case 185 is rotatably supported within the transfer case 191 via bearings 187 and 189. A gear 193 is fixed to the hollow shaft 183 external to the transfer case 191. The planetary carrier 177 is formed integral with a shaft 195 rotatably inserted into the hollow shaft 183. The shaft 197 is disposed coaxially with the shaft 195 and rotatably inserted into the two cases 185 and 191 from the right (as viewed in Fig. 5(A)). These two shafts 195 and 197 are supported by each other via a bearing 199.

Engine power is transmitted from the shaft 195 to the planetary carrier 177 of the center differential gear assembly 169 and then distributed from the sun gear 175 to the front differential gear assembly via the gear 193 and from the inner gear 171 to the rear differential gear assembly via the shaft 197.

A main clutch means 205 is in the form of a multidisk clutch comprising outer and inner friction plates 201 and 203 which are axially slidably arranged between the rotatable case 185 and the shaft 197 in alternate juxtaposed positional relationship to each other. The outer friction plates 201 are axially slidably engaged with the rotatable case 185 and the inner friction plates 203 are axially slidably engaged with the shaft 197.

A cam ring means or mechanism 213 actuable for controllably engaging only the main clutch means comprises a first slidable cam ring 207 and a second fixed ring 209. The first slidable cam ring 207 is disposed to the right of the main multidisk clutch 205. The second fixed cam ring 209 is spline coupled to the shaft 197 and fixed by a retainer ring 211 from the right side thereof.

A push ring 215 is axially slidably spline coupled to the first slidable cam ring 207. The pilot clutch means 221 in the form of a multidisk clutch comprises outer friction plates 217 and inner friction plates 219. The outer and inner friction plates 217 and 219 of the pilot clutch 225 are axially slidably disposed between the rotatable case 185 and the first slidable cam ring 207 in alternate juxtaposed positional relationship to each other. The outer friction plates 217 are axially slidably engaged with the rotatable case 185 and the inner friction plates 219 are axially slidably engaged with the first slidable cam ring 207. A pilot clutch actuating means 223 comprises an electromagnet 223 fixed to the transfer case 191 to the right of the pilot multidisk clutch 221.

When the electromagnet 223 is deenergized the clutches 221 and 205 are disengaged and rotative power is differentially distributed to the hollow shaft 183 (the second rotary member) and the shaft 197 (the first rotary member) via the inner gear 171, the planetary gear 173 and the sun gear 175. When the electromagnet 223 is energized, the push ring 215 is attracted toward the electromagnet 223 to thereby engage the pilot multidisk clutch 221. When the pilot clutch is thus engaged, the first slidable cam ring 207 is engaged with the rotatable case 185 which is spline engaged with the hollow shaft 183 (the second rotary member). Since the second fixed cam ring 209 is rotated by the shaft 197 (the first rotary member), the first slidable cam ring 207 is shifted leftward (as shown in Fig. 5(B)) by a cam thrust force generated by the cam mechanism 213 to thereby engage the main clutch 205. Thus the shafts 197 and 183 (the first and second rotary members) are coupled or locked with each other to limit the differential motion of the center differential gear assembly.

Further, the two air gaps S between the electromagnet 223 and the rotary case 185 will not vary even after the friction plates 217 and 219 have been worn away.

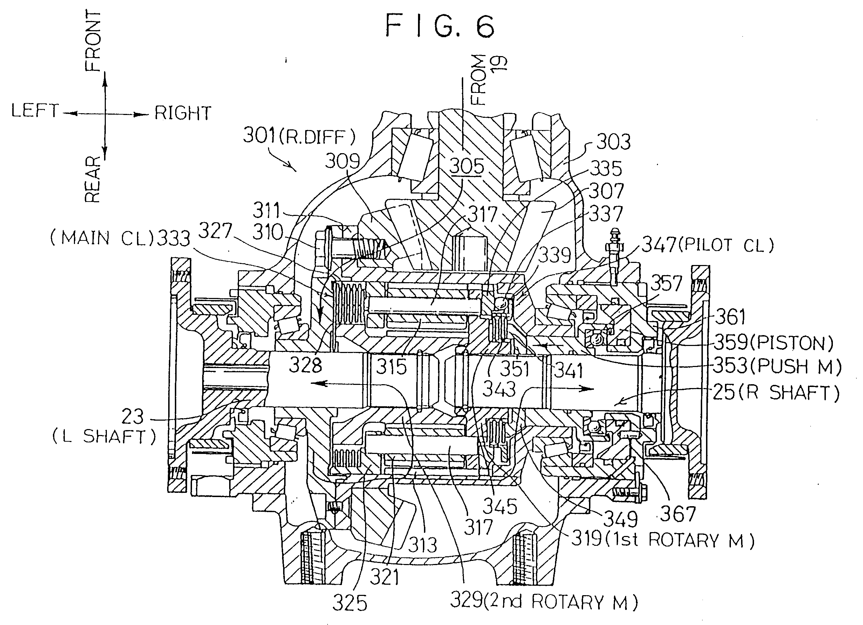

Fig. 6 shows a fifth embodiment of the coupling apparatus which is incorporated with a rear differential gear assembly 301. In this embodiment, the first rotatable means comprise a rotary member in the form of a planetary carrier 319 and the second rotatable means comprise a rotary member in the form of a sun gear 329. A pilot clutch means 347 is disposed between a cam ring means or mechanism 335-9 comprising cam rings 335 and 337 together with balls 337 sandwiched therebetween and the planetary carrier 319 which is rotatable within a differential carrier case 303. The cam ring 339 which is actuable for controllably engaging the main clutch means 333 is engaged with a differential case 311.

As shown in Fig. 6, one end of a drive pinion shaft 305 is inserted into the rear differential carrier case 303. A vehicle front end of the drive pinion shaft 305 is connected to a connection shaft 531 connected to a propeller shaft 19 (as shown in Fig. 2) and is rotated by engine power. A drive pinion gear 307 is fixed to an end of the drive pinion shaft 305 which is disposed within the differential carrier 303 and meshes with a ring gear 309.

This ring gear 309 is fixed to the differential case 311 by means of bolts 310 and rotatably supported within the rear differential carrier case 303. This differential case 311 is formed with an inner gear 313 on the inner surface thereof. The inner gear 313 is in mesh with outer planetary gears 315 rotatably supported by shafts 317 supported by the planetary carrier 319 (the first rotary member). The outer planetary gears 315 are in mesh with inner planetary gears 321 rotatably supported by axles 317 also supported by the planetary carrier 319. The inner planetary gears 321 are also in mesh with sun gear 329 (the second rotary member). A planetary gear assembly of the differential gear is thus constructed.

The inner circumference of sun gear 329 is spline coupled with a rear left wheel drive shaft 23. The inner circumference of planetary carrier 319 is spline coupled with a rear right wheel drive shaft 25.

When the differential case 311 is rotated by engine power, the power can be transmitted by means of the planetary gear assembly to the rear right wheel drive shaft 25 (via the planetary carrier 319) and to the rear left wheel drive shaft 23 via the sun gear 323. When there is a difference in driving resistance at the left and right wheels, the engine power is differentially distributed to the right and left wheels according to that driving resistance difference. The differential distribution is by virtue of the mutual rotation of the sun gear 329 and planetary carrier 319 based upon the rotation of the outer and inner planetary gears 315 and 321 around the sun gear 329 and their respective axes.

A clutch drum 325 is rotatably disposed to the left of the planetary gear assembly so as to be rotatable relative to the differential case 311. This clutch drum 325 is formed integrally with the planetary carrier 319 and axle 317. The main clutch means 333 for limiting differential motion is in the form of a multidisk clutch comprising outer friction plates 327 which are axially slidably engaged with an inner circumference of the clutch drum 325 and inner friction plates 328 which are axially slidably engaged with an outer circumference of a boss portion of the sun gear 329. The inner friction plates 328 are disposed in alternate juxtaposed positional relationship with respect to the outer friction plates 327. When the main multidisk clutch 333 is engaged, the relative rotation between the sun gear 329 and the planetary carrier 319 can be limited so that the differential motion between the rear right and left wheels can be limited.

The first slidable cam ring 335 is disposed on the right (as viewed in Fig. 6) side of the planetary carrier 319 and is axially slidably engaged with the inner gear 313 of the differential case 311. The second fixed cam ring 339 is disposed to the right of the slidable cam ring 335 such that the axial position thereof is determined by the differential case 311 via a thrust washer and the radial position thereof is determined by the differential case 311 via the slidable cam ring 335. A pilot clutch means in the form of a multidisk clutch comprises outer and inner friction plates 341 and 343 are disposed between a boss portion 345 of the planetary carrier 319 and the cam ring mechanism 335-9. The outer friction plates 341 are axially slidably engaged with the second fixed cam ring 339 and the inner friction plates 343 are axially slidably engaged with the boss portion 345 of the planetary carrier 319. The inner and outer friction plates are disposed in alternate juxtaposed positional relationship with respect to each other.

To the right of the pilot multidisk clutch 347, a pressure member 349 is spline engaged with the wheel shaft 25. The member 349 is urged rightward by a return spring 351 disposed between the pressure member 349 and the boss portion 345 of the planetary carrier 319.

A pilot clutch actuating means comprises a piston 359 disposed within a cylinder 361. Sealing members are airtightly disposed between the piston 359 and the cylinder 361 so as to form an air working chamber 387. A push member 353 spline engaged with the drive shaft 25 is disposed between the pressure member 349 and the piston 359 via a bearing 357.

When compressed air is supplied to the working chamber 367, the piston 359 moves to the left (as viewed in Fig. 6). The push member 353 is moved to the left under the influence of the piston and thus the pilot multidisk clutch 347 is controllably engaged whereby rotation is transmitted between the planetary carrier 319 and the second fixed cam ring 339 so that a cam thrust force is generated in the first slidable cam ring 335 to move the clutch drum 325 in the leftward direction via the planetary carrier 319. As a result, the main multidisk clutch 333 can be controllably engaged and the differential mention between the planetary carrier 319 (the first rotary member) and the sun gear 329 (the second rotary member) is locked. When the piston 359 is released, the return spring ring 351 returns the push member 353 in the rightward direction to disengage the pilot multidisk clutch 347.

If one or the other of the right and left wheels is slipping on an icy or slippery road, since the road resistance of the slipping wheel is small and that of the non-slipping wheel is large, the differential gear assembly operates to decrease the rotative speed of the non-slipping wheel and to increase the rotative speed of the slipping wheel. Therefore, the slipping wheel rotates at a higher rotative speed and the vehicle cannot be driven. Under these conditions, the cam ring means is actuated to controllably engage the main multidisk clutch 333 to increase the resistance to rotation of the slipping wheel to decrease the rotative speed thereof so that the vehicle can be driven.

As described above, when the pilot multidisk clutch 347 is engaged, the main multidisk clutch 333 is controllably engaged by means of the slidable cam ring 335 so that it is possible to stably control a large differential motion limiting power. Further, since the thrust reaction force of the cam ring 335 will not be applied to the pilot multidisk clutch 347, it is possible to control a large torque by a small torque resistance.

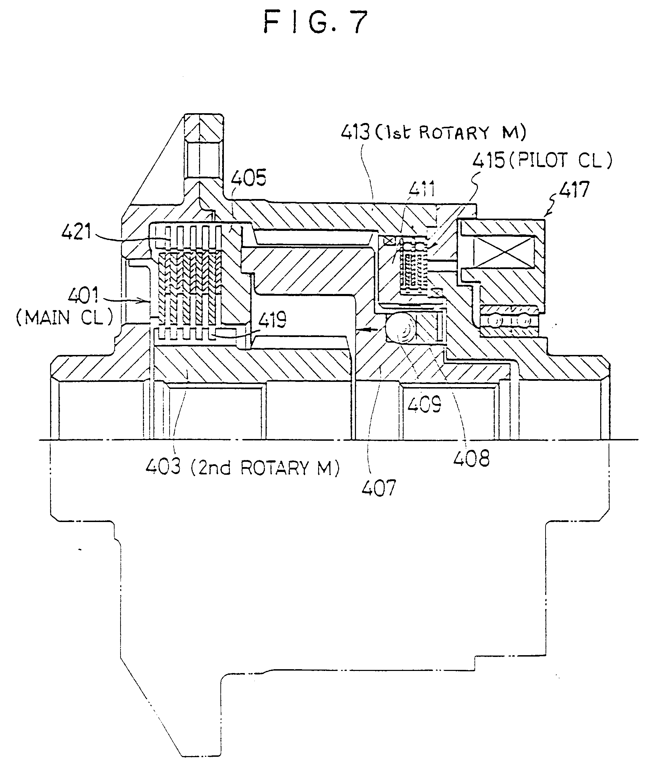

Fig. 7 shows a sixth embodiment of the coupling apparatus in which a magnetic fluid is utilized in a pilot clutch means 415. In this embodiment, the first rotatable means comprises a rotary member in the form of a differential gear case 413 and the second rotatable means comprises a rotary member in the form of a sun gear shaft 403. The pilot clutch means 415 is disposed between a cam ring means or mechanism 407-9 and the differential case 413 for transmitting rotation between the case and the cam ring means when controllably engaged.

The coupling apparatus comprises the differential case 413 (the first rotary member) which is formed with an integral inner gear, a sun gear shaft 403 (the second rotary member), a pilot clutch means in the form of a magnetic fluid clutch 415, a main clutch means in the form of a multidisk clutch 401, the cam mechanism 407-9 comprising a first slidable cam ring 407 (a planetary carrier having planetary gears), a second fixed cam ring 408 and balls 409, and pilot clutch actuating means comprising an electromagnet 417. A differential gear assembly is composed of the inner gear formed on the inner surface of the differential case 413, outer planetary gears in mesh with the inner gear, inner planetary gears in mesh with the outer planetary gears and the sun gear in mesh with the inner planetary gears; shown in Figs. 3 and 6. Further, the power transmission route is the same as in Fig. 4(A).

The main multidisk clutch comprises inner friction plates 419 which are axially slidably engaged with the sun gear shaft 403 and outer friction plates 421 which are axially slidably engaged with a clutch drum 405. The clutch drum 405 is fixed to the planetary carrier 407 which is rotatably coupled to the second fixed cam ring 408 via cam balls 409. The pilot clutch 415 is disposed in a working chamber filled with a magnetic fluid which is formed between a housing 411 and the differential case 413.

The electromagnet 417 is arranged on the outside of the differential case 413 so as to generate magnetic flux to be passed through the working chamber of the pilot clutch 415. Since the viscous resistance of the magnetic fluid changes according to the intensity of the magnetic flux passing through the magnetic fluid, it is possible to control the rotative speed of the second fixed cam ring 408 which is spline engaged with the housing 411. As a result, the cam ring mechanism is actuated to move the first slidable cam ring 407 in the leftward direction (as viewed in Fig. 7) whereby the main multidisk clutch 401 is controllably engaged to limit or lock the differential motion between the rotary members 403 and 413.

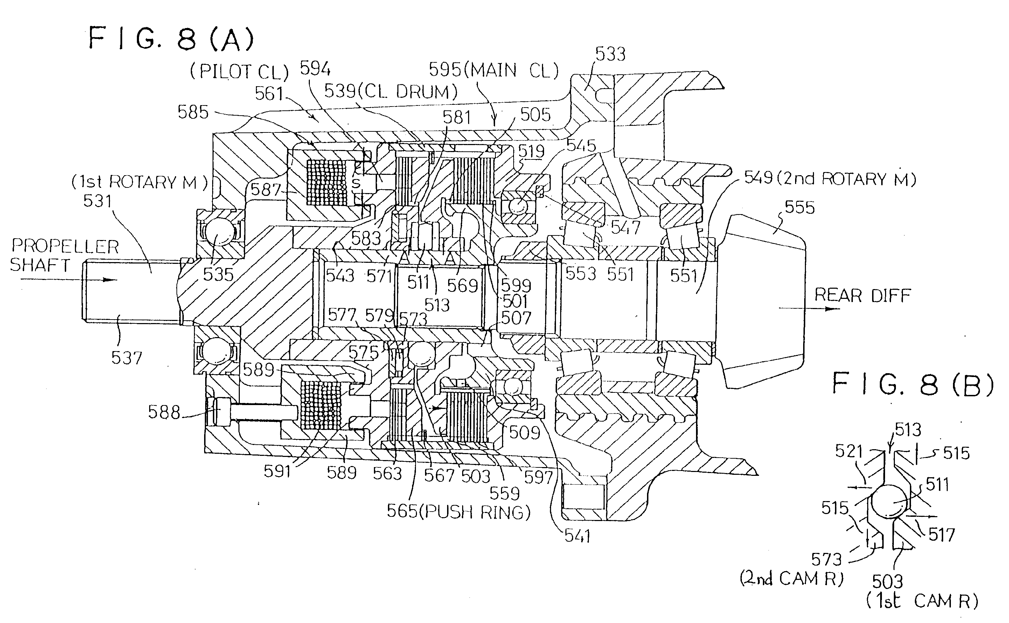

Figs 8(A) and (B) show a seventh embodiment of the coupling apparatus which is incorporated in an apparatus connected between a propeller shaft 19 and a rear differential gear assembly 521. In this embodiment, the first rotatable means comprises a rotary member in the form of a coupling shaft 531 which is connected to the propeller shaft and the second rotatable means comprises a rotary member in the form of a drive pinion shaft 549. A controllably engageable pilot clutch means 561 is disposed between a cam mechanism 513 and a clutch drum 539 fixed to the coupling shaft 531.

The coupling shaft 531 (first rotary member) passes into a carrier 533 of the rear differential gear assembly 521 and is supported by the carrier 533 via a bearing 535. The shaft 531 is provided with a spline portion 537 via which it is coupled to a propeller shaft 19 (shown in Fig. 2) whereby the shaft 531 is rotated or driven by engine power.

The clutch drum 539 is formed integral with the shaft 531 on the right end thereof (as viewed in Fig. 8(A)). Within the clutch drum 539, a hub member 541 (of the second rotary member) is rotatably supported by a support portion 543 disposed between the clutch drum 539 and a bearing 545 fixed by a retainer 547 attached to the clutch drum 539. The drive pinion shaft 549 is spline coupled with a the hub member 541.

This pinion shaft 549 is supported by the carrier 533 via bearings 551, and a lock nut 553 is screwed into the pinion shaft 549. A drive pinion gear 555 is formed on the right end of the pinion shaft 549 and geared with a ring gear 309 of a rear differential gear assembly 521 (shown in Fig. 2).

The pilot clutch means 561 is in the form of a multidisk clutch comprising inner and outer clutch plates 583, 563. The clutch drum 539 is formed with splines 559 at the inner circumference thereof. The outer clutch plates 563 of the pilot multidisk clutch 561 and a push ring 565 are axially slidably engaged with these splines 559. Retainers 567 are fitted to the right side of the push ring 565. The hub member 541 is formed with a large-diameter portion 569 and a small-diameter portion 571. A second cam ring 573 is axially movably fitted to the small-diameter portion 571. A thrust washer 577 and a bearing 579 are disposed between the left side wall 575 of the clutch drum 539 and the cam ring 573. The cam ring 573 is formed with splines 581 at the outer circumference thereof with which the inner clutch plates 583 are axially slidably engaged. The inner clutch plates are disposed in alternate juxtaposed positional relationship with respect to the outer clutch plates 563 which are axially slidably engaged with the splines 559 of the clutch drum 539.

A pilot clutch actuating means for controllably engaging the pilot clutch comprises an electromagnet 585 which is disposed to the left (as viewed in Fig. 8(A)) of the left wall 575. A yoke 587 of the electromagnet 585 is fixed to the carrier 533 by means of bolts 588. Two annular air gaps S are formed between two projections 589 of the yoke 587 and two annular projections 591 of the side wall 575 so as to form a magnetic circuit. Further, a non-magnetic member 594 or a cavity is formed between the two annular projections 591.

When the electromagnet 585 is energized, a push ring 565 is attracted toward the electromagnet 585 where the pilot multidisk clutch 561 is controllably engaged and thus the second cam ring 573 is coupled with the clutch drum 539.

The main clutch means 595 is in the form of a multidisk clutch comprising outer clutch plates 597 and inner clutch plates 501. The outer clutch plates 597 are axially slidably engaged with the splines 559 of the clutch drum 539. The inner clutch plates 501 are axially slidably engaged with splines 599 formed on the large-diameter portion 569 of the hub member 541 in alternate juxtaposed positional relationship with respect to the outer clutch plates 597.

A cam ring means or mechanism 513 comprises the second cam ring 573, a first axially slidable cam ring 503 and balls 511 sandwiched therebetween as shown in Fig. 8(B). The first cam ring 503 is axially slidably disposed between the two clutches 561 and 595. The inner circumference of the first cam ring 503 is axially slidably engaged with the small-diameter portion 571 of the hub member 541 and a side projection 505 of the cam ring 503 is axially slidably engaged with the splines 599 formed in the large-diameter portion 569 of the hub member 541. The hub member 541 is formed with oil passages 507 and 509 to introduce lubricant into the clutch drum 539 and the main multidisk clutch 595 disposed within the carrier 533.

When the pilot multidisk clutch 561 is controllably engaged, the clutch drum 539 and thereby shaft 531 (the first rotary member) and the hub member 541 and thereby shaft 549 (the second rotary member) are coupled via the second cam ring 573, the cam balls 511 and the second cam ring 503 so that engine power is transmitted from the rear differential gear 521 to the rear wheels 27 and 29 (shown in Fig. 2). In this case, the first cam ring 503 is axially slideably moved in the rightward direction by a cam thrust force 517 generated by the cam mechanism 513 due to a transmission torque 515, so that the main multidisk clutch 595 is pushed toward the right side wall 519 of the clutch drum 539 to generate a large engagement force. The thrust reaction force 521 is received by the clutch drum 539 via the thrust bearing 579 and the washer 577 in such a way that two opposite direction forces can be cancelled with each other by the clutch drum 539.

The engagement force of the main multidisk clutch 595 which is provided by the cam ring mechanism can be adjusted by adjusting the engagement force (sliding force) of the controllably engageable pilot multidisk clutch 561 which controls the transmission torque 515 applied to the cam mechanism 513 for generating the cam thrust force 517. When the pilot multidisk clutch 561 is disengaged, since a cam thrust force 517 is not generated, the main multidisk clutch 595 is also disengaged so that the coupling apparatus is released to allow differential rotation. As described above, since the clutch engagement torque can be adjustably transmitted, it is possible to obtain a large clutch engagement force in spite of the compact size of the coupling apparatus. Further, the air gaps S are not subjected to the influence of abrasion of the two multidisk clutches 561 and 595.

Further, since the first cam ring 503 is axially slidably engaged with the splines 559 formed on the large diameter portion 569 of the hub member 541 (not on the small-diameter portion 571), it is possible to obtain a large sliding resistance in spite of the small sliding force. Therefore, the slidable motion of the first cam ring 503 is smooth; the thrust force can be transmitted efficiently; a large engagement force can be obtained; and therefore the clutch engagement operation is stable. Further, the splines 599 formed on the large-diameter portion 599 of the hub member 541 are used in common for both the inner clutch plates 501 and the first cam ring 503, it is unnecessary to provide an additional coupling member for the first cam ring 503, thus reducing the cost of the apparatus.

The operation of the coupling apparatus will now be explained in relation to the power transmission system of a vehicle as shown in Fig. 2.

Drive power from the engine 1 is speed changed by the transmission 3 and distributed through the center differential gear 5 to the front left and right wheels 11 and 13 and to the propeller shaft 17 via the 2-4 WD switch mechanism 17.

When the coupling apparatus is disengaged open, engine power is not transmitted to the rear wheels 27 and 29, so that the vehicle is driven in FF (front engine front wheel drive) mode to improve the fuel consumption rate.

When the coupling apparatus is engaged, engine power is transmitted to the rear wheels 27 and 29 according to the engagement force so that the vehicle is driven in 4WD mode. Therefore, if one of the front or rear wheels is slipping on a muddy road, engine power is transmitted to the other non-slipping wheels so that the vehicle can be driven on the slippery road. Further, since the engine power transmitted to the rear wheels can be adjusted by controlling the engagement force of the controllably engageable pilot multidisk clutch 561, it is possible to lock the coupling apparatus by applying a large engagement force to the main multidisk clutch 595.

Further, since differential motion between the front and rear wheels can be controlled by a slipping action of the multidisk clutches 561 and 595, the coupling apparatus 519 can function as a center differential gear disposed between the front and rear wheels. Therefore, the vehicle can be turned smoothly without producing tight corner braking phenomenon. Further, it is also possible to improve the vehicle straight driving stability by increasing the differential limitation power between the front and rear wheels.

Further, in this embodiment, it is also possible to dispose the pilot multidisk clutch 561 on the side of the hub member 541 and further to axially slidably engage the first cam ring 503 with the splines 559 formed on the large-diameter portion of the clutch drum 539, in order to further reduce the sliding resistance of the second cam ring 503.

It will be appreciated that in the above-described coupling apparatus, that when the pilot clutch actuating means is actuated, the controllably engageable pilot clutch means is controllably engaged for actuating the cam ring means which is actuated in such a way that rotation of a first slidable cam ring is controlled relative to a second fixed cam ring to produce a controlled rotative speed difference therebetween. This speed difference causes the generation of a cam thrust force between the two cam ring members whereby the main clutch is engaged so that the first and second rotatable means are coupled. Since the engagement torque of the pilot clutch is controlled by the force exerted by the pilot clutch actuating means, it is possible to controllably transmit torque between the first and second rotatable means.

It will be appreciated that when the coupling apparatus is incorporated in a differential gear assembly for an automotive vehicle, it is possible to reliably limit or control differential motion of the gear assembly.

As described above, in a coupling apparatus provided with a main and a pilot multidisk clutch, since the main multidisk clutch is engaged by a cam thrust force generated between two cam rings whose relative rotative speed can be controlled by the pilot clutch controllably engaged according to the force exerted by the pilot clutch actuating means (the electromagnet or the air piston), it is possible to obtain a large and stable engagement force of the main clutch in spite of a compact apparatus size. Further the engagement force of the main clutch is not directly subjected to the influence of multidisk friction abrasion or fluctuation in friction coefficient between friction plates of the pilot clutch. In addition, since the axial movement of engagement of the pilot clutch is opposite to the direction of the axial movement of engagement of the main clutch, the main clutch operation is stable without being directly subjected to the variation of characteristics of the clutch actuator; that is the pilot clutch and the cam ring mechanism. Further, the air gaps S between the electromagnet and the member of the apparatus will not vary after the pilot clutch friction plates have been worn away, it is possible to stably generate a constant cam thrust force by the electromagnet via the pilot clutch.

## Claims

1. A coupling apparatus comprising:
first rotatable means (1029; 47; 111, 113; 197; 319; 407; 531);
second rotatable means (1033; 53; 109; 183; 329; 403; 549);
main clutch means (1045; 75; 147; 205; 333; 401; 595) for controllably transmitting a rotative motion between said first and second rotatable means when controllably engaged; and
cam ring means (1053; 79; 151; 213; 335-9; 407-9; 513) actuable for controllably engaging only said main clutch means when axially slidably actuated;
characterized by a pilot clutch means (1061; 87; 157; 221; 347; 415; 561) for actuating said cam ring means when controllably engaged; and
pilot clutch actuating means (1063; 89; 161; 223; 359; 417; 585) for adjustably controllably engaging said pilot clutch means, said pilot clutch means being adjustably controllably engaged to an extent determined by the force exerted by the pilot clutch actuating means.

2. A coupling apparatus according to claim 1, wherein said second rotatable means (1033; 109; 183; 329; 403; 549) is disposed coaxially with said first rotatable means; said cam ring means (1053; 151; 213; 335-9; 407-9, 513) is axially slidably actuable and disposed coaxially with said first and second rotatable means and said main clutch means; and said controllably engageable pilot clutch means (1061; 157; 221; 347; 415; 561) is arranged to provide a controllable rotative speed difference in said cam ring means when controllably engaged whereby said cam ring means is axially slidably actuated.

3. A coupling apparatus according to claim 1 or 2, wherein said coupling apparatus is incorporated with a planetary differential gear assembly (99) housed within a transfer case (119), said first rotatable means is a planetary carrier (111, 113), said second rotatable means is a sun gear (109) and said pilot clutch means (157) is arranged to transmit rotation between said planetary carrier (111, 113) and said cam ring means (151) when controllably engaged.

4. A coupling apparatus according to claim 1 or 2, wherein said coupling apparatus is incorporated with a planetary differential gear assembly housed within a transfer case (191), said first rotatable means is a shaft (197), said second rotatable means is shaft (183) formed with a sun gear (175) and said pilot clutch means (221) is arranged to transmit rotation between a rotatable case (185), which rotatable case is rotatable within said transfer case and is rotatably connected with said shaft (183), and said cam ring means (213) when controllably engaged.

5. A coupling apparatus according to claim 1 or 2, wherein said coupling apparatus is incorporated with a differential gear assembly (301) housed within a differential carrier case (303), said first rotatable means is a planetary carrier (319) which is rotatable within said differential carrier case, said second rotatable means is a sun gear (329) and said pilot clutch means (347) is arranged to transmit rotation between said planetary carrier (319) and said cam ring means (335-9) when controllably engaged.

6. A coupling apparatus according to claim 1 or 2, wherein said coupling apparatus is mounted intermediate the front and rear wheel drive shafts of a four-wheel drive vehicle, said first rotatable means is a coupling shaft (531) rotatably connected to a propeller shaft (19), said second rotatable means is a drive pinion shaft (549) of a rear differential gear assembly (521) and said pilot clutch means (561) is arranged to transmit rotation between a clutch drum (539) fixed to said coupling shaft (531) and said cam ring means (513) when controllably engaged.

7. A coupling apparatus according to claim 1, further comprising a third rotatable means (31), wherein said first rotatable means (47) is differentially coupled to said third rotatable means; said second rotatable means (53) is disposed coaxially with said first rotatable means and is differentially coupled to said third rotatable means; said cam ring means (79) is axially slidably actuable and disposed coaxially with said first, second and third rotatable means and said main clutch means; and said controllably engageable pilot clutch means (87) is arranged to transmit rotation between said cam ring means and said third rotatable means for providing a controllable rotative speed difference in said cam ring means when controllably engaged, whereby said cam ring means is axially slidably actuated.

8. A coupling apparatus according to any one of the preceding claims, wherein said cam ring means (1053; 79; 151; 213; 335-9; 407-9; 513) comprises a first slideable cam ring (1047; 47; 149; 207; 335; 407; 503) and a second cam ring (1049, 77, 125, 209, 339, 408, 573), said first cam ring being axially slidable in a direction opposite to an axial movement of engagement of said pilot clutch means (1061; 87; 157; 221; 347; 451; 561) in response to a cam thrust force generated between said first and second cam rings to controllably engage only said main clutch means.

9. A coupling apparatus according to claim 8, wherein said cam thrust force is generated between said first and second cam rings (1047, 1049; 149, 125; 207, 209) by a plurality of projections opposingly formed along each inner contact surface of said first and second cam rings so as to be slidably engaged with each other.

10. A coupling apparatus according to claim 8 or 9, wherein said cam thrust force is generated between said first and second cam rings (77, 47; 335, 339; 407, 48; 503, 573) by a plurality of balls (78, 337; 409; 511) sandwiched between two recesses opposingly formed along each inner contact surface of said first and second cam rings which engage each other via said balls.

11. A coupling apparatus according to any one of the preceding claims, wherein said pilot clutch actuating means is an electromagnet (1063, 89, 161, 223, 585) adapted to controllably engage said pilot clutch means via a push ring (1055, 93, 159, 215, 565).

12. A coupling apparatus according to any one of claims 1 to 10, wherein said pilot clutch actuating means is an air operated piston (359) adapted to controllably engage said pilot clutch means via a push member (353).

13. A coupling apparatus according to any one of the preceding claims, wherein said pilot clutch means (1061; 87; 157; 221; 347; 561) is a multidisk friction plate clutch.

14. A coupling apparatus according to any one of claims 1 to 11, wherein said pilot clutch means (415) is a magnetic fluid multidisk plate clutch, the viscosity of said magnetic fluid being adjusted according to magnetic intensity applied thereto for controllable engagement thereof.

15. A coupling apparatus according to any one of the preceding claims, wherein said main clutch means is a multidisk friction plate clutch.

## Patentansprüche

1. Eine Kupplungsvorrichtung umfassend:
eine erste, drehbare Einrichtung (1029; 47, 111, 113; 197; 319; 407; 531);
eine zweite, drehbare Einrichtung (1033; 53; 109; 183; 329; 403; 549);
eine Hauptkupplungseinrichtung (1045; 75; 147; 205; 333; 401; 595) zum steuerbaren Übertragen einer Drehbewegung zwischen der genannten ersten und zweiten, drehbaren Einrichtung, wenn steuerbar eingegriffen wird; und
eine Nockenringeinrichtung (1053; 79; 151; 213; 335-9; 407-9; 513), die zum steuerbaren Eingriff nur der genannten Hauptkupplungseinrichtung betätigbar ist, wenn sie axial, verschiebbar betätigt wird;
**gekennzeichnet** durch eine Steuerkupplungseinrichtung (1061; 87; 157; 221; 347; 415; 561) zum Betätigen der genannten Nockenringeinrichtung, wenn sie steuerbar eingreift; und
eine Steuerkupplungsbetätigungseinrichtung (1063; 89; 161; 223; 359; 417; 585) zum einstellbaren, steuerbaren Eingreifen der genannten Steuerkupplungseinrichtung, wobei die genannte Steuerkupplungseinrichtung einstellbar steuerbar in einem Maß eingreifbar ist, das durch die Kraft bestimmt wird, die durch die Steuerkupplungsbetätigungseinrichtung ausgeübt wird.

2. Eine Kupplungsvorrichtung gemäß Anspruch 1, in der die genannte zweite, drehbare Einrichtung (1033; 109; 183; 329; 403; 549) koaxial zu der genannten ersten, drehbaren Einrichtung angeordnet ist; die genannte Nockenringeinrichtung (1053; 151; 213; 335-9; 407-9, 513) axial verschiebbar betätigbar und koaxial zu der genannten ersten und zweiten, drehbaren Einrichtung und der genannten Hauptkupplungseinrichtung angeordnet ist; und die genannte steuerbar eingreifbare Steuerkupplungseinrichtung (1061; 157; 221; 347; 415; 561) angeordnet ist, einen steuerbaren Drehzahlunterschied in der genannten Nockenringeinrichtung zu schaffen, wenn steuerbar eingegriffen wird, wodurch die genannte Nokkenringeinrichtung axial verschiebbar betätigt wird.

3. Eine Kupplungsvorrichtung gemäß Anspruch 1 oder 2, in der die genannte Kupplungsvorrichtung in eine Planetendifferentialgetriebevorrichtung (99) eingeschlossen ist, die innerhalb eines Übertragungsgehäuses (119) untergebracht ist, die genannte erste, drehbare Einrichtung ein Planetenradträger (111, 113) ist, die genannte zweite, drehbare Einrichtung ein Sonnenzahnrad (109) ist, und die genannte Steuerkupplungseinrichtung (157) angeordnet ist, eine Drehung zwischen dem genannten Planetenradträger (111, 113) und der genannten Nockenringeinrichtung (151) zu übertragen, wenn steuerbar eingegriffen wird.

4. Eine Kupplungsvorrichtung gemäß Anspruch 1 oder 2, in der die genannte Kupplungsvorrichtung in eine Planetendifferentialzahnradvorrichtung (99) eingeschlossen ist, die innerhalb eines Übertragungsgehäuses (191) untergebracht ist, wobei die genannte erste, drehbare Einrichtung eine Welle (197) ist, die genannte zweite, drehbare Einrichtung eine Welle (183) ist, die mit einem Sonnenzahnrad (175) ausgebildet ist, und die genannte Steuerkupplungseinrichtung (221) angeordnet ist, eine Drehung zwischen einem drehbaren Gehäuse (185), wobei das drehbare Gehäuse innerhalb des genannten Übertragungsgehäuses drehbar ist und drehbar mit der genannten Welle (183) verbunden ist, und der genannten Nockenringeinrichtung (213) zu übertragen, wenn steuerbar eingegriffen wird.

5. Eine Kupplungsvorrichtung gemäß Anspruch 1 oder 2, in der die genannte Kupplungsvorrichtung in eine Differentialzahnradvorrichtung (301) eingeschlossen ist, die innerhalb eines Differentialträgergehäuses (303) untergebracht ist, die genannte erste, drehbare Einrichtung ein Planetenradträger (319) ist, der innerhalb des genannten Differentialträgergehäuses drehbar ist, die genannte zweite, drehbare Einrichtung ein Sonnenzahnrad (329) ist, und die genannte Steuerkupplungseinrichtung (347) angeordnet ist, eine Drehung zwischen dem genannten Planetenradträger (319) und der genannten Nockenringeinrichtung (335-9) zu übertragen, wenn steuerbar eingegriffen wird.

6. Eine Kupplungsvorrichtung gemäß Anspruch 1 oder 2, in der die genannte Kupplungsvorrichtung zwischen den Antriebswellen für die Vorder- und Hinterräder eines Fahrzeugs mit Vierradantrieb montiert ist, die genannte erste, drehbare Einrichtung eine Kupplungswelle (531) ist, die drehbar mit einer Antriebswelle (19) verbunden ist, die genannte zweite, drehbare Einrichtung eine Antriebsritzelwelle (549) einer hinteren Differentialzahnradvorrichtung (521) ist, und die genannte Steuerkupplungseinrichtung (561) angeordnet ist, eine Drehung zwischen einer Kupplungstrommel (539), die an der genannten Kupplungswelle (531) befestigt ist, und der genannten Nockenringeinrichtung (513) zu übertragen, wenn steuerbar eingegriffen wird.

7. Eine Kupplungsvorrichtung gemäß Anspruch 1, ferner umfassend eine dritte, drehbare Einrichtung (31), wobei die genannte erste, drehbare Einrichtung (47) differentiell mit der genannten dritten, drehbaren Einrichtung gekuppelt ist; die genannte zweite, drehbare Einrichtung (53) koaxial zu der genannten ersten, drehbaren Einrichtung angeordnet ist und differentiell mit der genannten dritten, drehbaren Einrichtung gekuppelt ist; die genannte Nockenringeinrichtung (79) axial verschiebbar betätigbar ist und koaxial zu der genannten ersten, zweiten und dritten, drehbaren Einrichtung und der genannten Hauptkupplungseinrichtung angeordnet ist; und die genannte steuerbar eingreifbare Steuerkupplungseinrichtung (87) angeordnet ist, eine Drehung zwischen der genannten Nockenringeinrichtung und der genannten dritten, drehbaren Einrichtung zu übertragen, um einen steuerbaren Drehzahlunterschied bei der genannten Nockenringeinrichtung bereitzustellen, wenn steuerbar eingegriffen wird, wodurch die genannte Nokkenringeinrichtung axial verschiebbar betätigt wird.

8. Eine Kupplungsvorrichtung gemäß irgendeinem der vorhergehenden Ansprüche, in der die genannten Nockenringeinrichtung (1053; 79; 151; 213; 335-9; 407-9; 513) einen ersten, verschiebbaren Nockenring (1047; 47; 149; 207; 335; 407; 503) und einen zweiten Nockenring (1049, 77, 125, 209, 339, 408, 573) umfaßt, der genannte erste Nockenring axial in einer zu einer Axialbewegung zum Eingriff der genannten Steuerkupplungseinrichtung (1061; 87; 157; 221; 347; 451; 561) in Reaktion auf eine Nockenaxialkraft verschiebbar ist, die zwischen dem genannten ersten und zweiten Nockenring erzeugt wird, um steuerbar nur die genannte Hauptkupplungseinrichtung in Eingriff zu bringen.

9. Eine Kupplungsvorrichtung gemäß Anspruch 8, in der die genannten Nockenaxialkraft zwischen dem genannten ersten und zweiten Nockenring (1047, 1049; 149, 125; 207, 209) durch eine Vielzahl von Vorsprüngen erzeugt wird, die gegenüberliegend entlang jeder inneren Berührungsoberfläche des genannten ersten und zweiten Nockenrings so gebildet sind, daß sie verschiebbar miteinander eingreifen.

10. Eine Kupplungsvorrichtung gemäß Anspruch 8 oder 9, in der die genannte Nockenaxialkraft zwischen dem genannten ersten und zweiten Nockenring (77, 47; 335, 339; 407, 48; 503, 573) durch eine Mehrzahl von Kugeln (78, 337; 409; 511) erzeugt wird, die zwischen zwei Ausnehmungen zwischengefügt sind, die entgegensetzt entlang jeder inneren Berührungsoberfläche des genannten ersten und zweiten Nockenrings gebildet sind, die miteinander über die genannten Kugeln eingreifen.

11. Eine Kupplungsvorrichtung gemäß irgendeinem der vorhergehenden Ansprüche, in der die genannte Steuerkupplungsbetätigungseinrichtung ein Elektromagnet (1063, 89, 161, 223, 585) ist, der steuerbar die genannte Steuerkupplungseinrichtung über einen Drückring (1055, 93; 159, 215; 565) in Eingriff bringen kann.

12. Eine Kupplungsvorrichtung gemäß irgendeinem der Ansprüche 1 bis 10, in der die genannte Steuerkupplungsbetätigungseinrichtung ein luftbetriebener Kolben (359) ist, der geeignet ist, die genannte Steuerkupplungseinrichtung über ein Drückelement (353) steuerbar in Eingriff zu bringen.

13. Eine Kupplungsvorrichtung gemäß irgendeinem der vorhergehenden Ansprüche, in der die genannte Steuerkupplungseinrichtung (1061; 87; 157; 221; 347; 561) eine Mehrscheibenreibungsplattenkupplung ist.

14. Eine Kupplungsvorrichtung gemäß irgendeinem der Ansprüche 1-11, in der die genannte Steuerkupplungseinrichtung (415) eine Magnetfluid-Mehrscheibenplattenkupplung ist, wobei die Viskosität des Magnetfluids gemäß der magnetischen Intensität eingestellt wird, die auf es zum steuerbaren Eingriff davon ausgeübt wird.

15. Eine Kupplungsvorrichtung gemäß irgendeinem der vorhergehenden Ansprüche, in der die genannte Hauptkupplungseinrichtung eine Mehrscheiben-Reibungsplattenkupplung ist.

## Revendications

1. Appareil d'accouplement comprenant :
- des premiers moyens rotatifs (1029 ; 47 ; 111, 113 ; 197 ; 319 ; 407; 531) :
- des seconds moyens rotatifs (1033 ; 53 ; 109; 183 ; 329 ; 403 ; 549) ;
- des moyens d'embrayage principaux (1045 ; 75 ; 147 ; 205 ; 333 ; 401 ; 595) afin de transmettre de façon commandée un mouvement de rotation entre lesdits premiers et lesdits seconds moyens rotatifs lorsqu'ils sont engagés de façon commandée ; et
- des moyens formant bague à came (1053 ; 79 ; 151 ; 213 ; 335-9 ; 407- 9 ; 513) capables d'être actionnés afin d'engager de façon commandée uniquement lesdits moyens d'embrayage principaux lorsqu'ils sont actionnés en coulissement axial ;
caractérisé par des moyens d'embrayage pilote (1061 ; 87 ; 157 ; 221 ; 347 ; 415 ; 561) pour actionner lesdits moyens formant bague à came lorsqu'ils sont engagés de façon commandée ; et
- des moyens d'actionnement d'embrayage pilote (1063 ; 89 ; 161 ; 223 ; 359 ; 417 ; 585) afin d'engager de façon commandée et réglables lesdits moyens d'embrayage pilote, lesdits moyens d'embrayage pilote étant engagés de façon commandée et réglable dans une mesure déterminée par la force exercée par les moyens d'actionnement d'embrayage pilote.

2. Appareil d'accouplement selon la revendication 1, dans lequel lesdits seconds moyens rotatifs (1033 ; 109 ; 183 ; 329 ; 403 ; 549) sont disposés coaxialement avec lesdits premiers moyens rotatifs ; lesdits moyens formant bague à came (1053 ; 151; 213 ; 335-9 ; 407-9 ; 513) peuvent être actionnés en coulissement axial et sont disposés coaxialement avec lesdits premiers et lesdits seconds moyens rotatifs et lesdits moyens d'embrayage principal ; et lesdits moyens d'embrayage pilote (1061 ; 157 ; 221 ; 347 ; 415 ; 561) susceptibles d'être engagés de manière commandée sont agencés de façon à établir une différence de vitesse de rotation commandée dans lesdits moyens formant bague à came lorsqu'ils sont engagés de façon commandée, grâce à quoi lesdits moyens formant bague à came sont actionnés en coulissement axial.

3. Appareil d'accouplement selon l'une ou l'autre des revendications 1 et 2, dans lequel ledit appareil d'accouplement est incorporé dans un ensemble à engrenage différentiel planétaire (99) abrité à l'intérieur d'un carter de transfert (119), lesdits premiers moyens rotatifs étant un porte-pignons satellites (111, 113), lesdits seconds moyens rotatifs étant une roue solaire (109), et lesdits moyens d'embrayage pilote (157) sont agencés de façon à transmettre la rotation entre le porte-pignons satellites (111, 113) et lesdits moyens formant bague à came (151) lorsqu'ils sont engagés de façon commandée.

4. Appareil d'accouplement selon l'une ou l'autre des revendications 1 et 2, dans lequel ledit appareil d'accouplement est incorporé dans un ensemble à engrenage différentiel planétaire abrité à l'intérieur d'un carter de transfert (191), lesdits premiers moyens rotatifs sont constitués par un arbre (197), lesdits seconds moyens rotatifs sont constitués par un arbre (183) formé avec une roue solaire (175), et lesdits moyens d'embrayage pilote (221) sont agencés de façon à transmettre la rotation entre un carter rotatif (185), ledit carter rotatif étant capable de tourner à l'intérieur dudit carter de transfert et étant connecté en rotation avec ledit arbre (183), et lesdits moyens formant bague à came (213) lorsqu'ils sont engagés de façon commandée.

5. Appareil d'accouplement selon l'une ou l'autre des revendications 1 et 2, dans lequel ledit appareil d'accouplement est incorporé dans un ensemble à engrenage différentiel (301) abrité dans un carter de support de différentiel (303), lesdits premiers moyens rotatifs étant un porte-pignons satellites (319) qui est susceptible de tourner à l'intérieur dudit carter de support de différentiel, lesdits seconds moyens rotatifs étant une roue solaire (329), et lesdits moyens d'embrayage pilote (347) sont agencés de façon à transmettre la rotation entre ledit porte-pignons satellites (319) et lesdits moyens formant bague à came (335-9) lorsqu'ils sont engagés de façon commandée.

6. Appareil d'accouplement selon l'une ou l'autre des revendications 1 et 2, dans lequel ledit appareil d'accouplement est monté en position intermédiaire entre les arbres d'entraînement pour les roues avant et arrière d'un véhicule à quatre roues motrices, lesdits premiers moyens rotatifs étant un arbre d'accouplement (531) connecté en rotation à un arbre moteur (19), lesdits seconds moyens rotatifs étant un arbre (549) pour un pignon d'entraînement d'un ensemble à engrenage différentiel arrière (521), et lesdits moyens d'embrayage pilote (561) sont agencés de façon à transmettre la rotation entre un tambour d'embrayage (539) fixé audit arbre d'accouplement (531) et lesdits moyens formant bague à came (513) lorsqu'ils sont engagés de façon commandée.

7. Appareil d'accouplement selon la revendication 1 et comprenant en outre des troisièmes moyens rotatifs (31), dans lequel lesdits premiers moyens rotatifs (47) sont accouplés de façon différentielle avec lesdits troisièmes moyens rotatifs ; lesdits seconds moyens rotatifs (53) sont disposés coaxialement auxdits premiers moyens rotatifs et étant accouplés de façon différentielle auxdits troisièmes moyens rotatifs ; lesdits moyens formant bague à came (79) peuvent être actionnés en coulissement axial et sont disposés coaxialement avec lesdits premier, second et troisième moyens rotatifs et lesdits moyens d'embrayage principaux ; et lesdits moyens d'embrayage pilote (87), capables d'être engagés de façon commandée, sont agencés de façon transmettre la rotation entre lesdits moyens formant bague à came et lesdits troisièmes moyens rotatifs afin d'établir une différence de vitesse de rotation susceptible d'être commandée dans lesdits moyens formant bague à came lorsqu'ils sont engagés de façon commandée, grâce à quoi lesdits moyens formant bague à came sont actionnés en coulissement axial.

8. Appareil d'accouplement selon l'une quelconque des revendications précédentes, dans lequel lesdits moyens formant bague à came (1053 ; 79 ; 151; 213 ; 335-9 ; 407-9 ; 513) comprennent une première bague à came coulissante (1047 ; 47 ; 149 ; 207 ; 335 ; 407 ; 503) et une seconde bague à came (1049 ; 77, 125, 209, 339, 408, 573), ladite première bague à came étant capable de coulisser axialement dans une direction opposée à un mouvement axial d'engagement desdits moyens d'embrayage pilote (1061 ; 87 ; 157 ; 221 ; 347 ; 415 ; 561) en réponse à une force de poussée engendrée entre lesdites première et seconde bagues à came afin d'engager de façon commandée uniquement lesdits moyens d'embrayage principaux.

9. Appareil d'accouplement selon la revendication 8, dans lequel ladite force de poussée est engendrée entre ladite première et ladite seconde bague à came (1047, 1049 ; 149, 125 ; 207, 209) par une pluralité de projections qui sont formées de façon opposée le long de chaque surface de contact intérieur de ladite première et de ladite seconde bague à came de manière à être engagées en coulissement les unes avec les autres.

10. Appareil d'accouplement selon l'une ou l'autre des revendications 8 et 9, dans lequel ladite force de poussée est engendrée entre ladite première et ladite seconde bague à came (77, 47 ; 335, 339 ; 407, 48 ; 503, 573) par une pluralité de billes (78, 337 ; 409 ; 511) prises en sandwich entre deux évidements, formés en opposition le long de chaque surface de contact intérieur de ladite première et de ladite seconde bague à came, qui s'engagent l'un avec l'autre via lesdites billes.

11. Appareil d'accouplement selon l'une quelconque des revendications précédentes, dans lequel lesdits moyens d'actionnement de l'embrayage pilote sont constitués par un électroaimant (1063, 89, 161, 223, 585) adapté à engager de façon commandée lesdits moyens d'embrayage pilote via une bague de poussée (1055, 93, 159, 215, 565).

12. Appareil d'accouplement selon l'une quelconque des revendications 1 à 10, dans lequel lesdits moyens d'actionnement de l'embrayage pilote sont constitués par un piston (359) actionné au moyen d'air et adapté à engager de façon commandée lesdits moyens d'embrayage pilote via un élément poussoir (353).

13. Appareil d'accouplement selon l'une quelconque des revendications précédentes, dans lequel lesdits moyens d'embrayage pilote (1061 ; 87 ; 157 ; 221 ; 347 ; 561) sont formés par un embrayage à plaques de friction multidisque.

14. Appareil d'accouplement selon l'une quelconque des revendications 1 à 11, dans lequel lesdits moyens d'embrayage pilote (415) sont constitués par un embrayage à plaques multidisque à fluide magnétique, la viscosité dudit fluide magnétique étant ajustée selon l'intensité magnétique qui lui est appliquée afin d'assurer un engagement commandé dudit embrayage.

15. Appareil d'accouplement selon l'une quelconque des revendications précédentes, dans lequel lesdits moyens d'embrayage principaux sont constitués par un embrayage à plaques de friction multidisque.
